# EUROPEAN PATENT SPECIFICATION

(11) **EP 3 888 482 B1**
(45) Date of publication and mention of the grant of the patent: **21.02.2024**
(21) Application number: 19899902.1
(22) Date of filing: 18.12.2019
(51) Int. Cl.: A42B 3/04, G02B 27/01, G02B 27/02

(54) **HEAD-UP DISPLAY DEVICE AND HELMET**
HEADUP-ANZEIGEVORRICHTUNG UND HELM
DISPOSITIF D'AFFICHAGE TÊTE HAUTE ET CASQUE

(30) Priority: 20.12.2018 JP 2018238206; 20.12.2018 JP 2018238261; 20.11.2019 JP 2019209474
(43) Date of publication of application: 06.10.2021
(73) Proprietor: NS West Inc., Shobara-shi, Hiroshima, 727-0004 (JP); SHOEI CO., LTD., Taito-ku Tokyo 110-0016 (JP)
(72) Inventor: HIRAMATSU, Masanori, Shobara-shi, Hiroshima 727-0004 (JP); YAMADA, Manabu, Shobara-shi, Hiroshima 727-0004 (JP); SATOU, Kou, Shobara-shi, Hiroshima 727-0004 (JP)
(74) Representative: BRP Renaud & Partner mbB Rechtsanwälte Patentanwälte Steuerberater
(86) International application number: PCT/JP2019/049571
(87) International publication number: WO 2020/130028

(56) References cited:
- WO-A1-2008/023542
- WO-A1-2010/044326
- WO-A1-2014/002397
- WO-A1-2015/040776
- WO-A1-2015/102063
- WO-A1-2016/158174
- WO-A1-2016/158176
- JP-A- H04 119 108
- JP-A- 2006 350 267
- JP-A- 2017 030 530
- US-A- 5 093 938
- US-A- 5 856 811
- US-A- 5 856 811
- US-A1- 2016 266 283

## Description

### TECHNICAL FIELD

The present disclosure relates to a head-up display device to be mounted on a helmet, and a helmet equipped with a head-up display device.

### BACKGROUND ART

In a conventional technique, a head-up display device (hereinafter referred to as an "HUD device") is mounted on a helmet used in driving a motorcycle so that a user (driver) wearing the helmet can visually recognize various types of information, such as vehicle information including vehicle speed, map information obtained by a navigation system, and warning information, displayed as virtual images in a forward field of view of the user to thereby enhance convenience and safety in driving the motorcycle.

The HUD device mounted on the helmet includes a projection module that projects display light in accordance with information to be displayed, and a combiner that reflects display light projected by the projection module to an eye of the user who is a wearer of the helmet. The combiner is composed of a semitransparent mirror, is disposed at a position within the forward field of view of the user in a window opening formed in a front portion of the helmet, and allows light from the front of the user to pass through the combiner. Accordingly, the user can visually recognize a virtual image (display image) by display light with the virtual image superimposed on scenery through the combiner. An example of such an HUD device is described in JP 2017-030530. US 5,856,811 also discloses a head-up display device configured to be mounted on a helmet.

### SUMMARY OF THE INVENTION

### TECHNICAL PROBLEM

A projection module includes, for example, a light emitter configured to emit display light and a mirror configured to reflect display light emitted from the light emitter toward a projection target. The light emitter and the mirror can be incorporated separately in the right and left sides of a chin portion of a helmet in order to take a balance of the helmet. Here, the light emitter has a configuration in which a case houses a light source, a plurality of lenses for, for example, focusing light from the light source, a display element for generating display light by using light that has passed through the lenses, and other components.

If the light emitter described above employs a configuration in which a plurality of components from the light source to the display element through the plurality of lenses are arranged in the same direction, the light emitter comes to have a shape elongated in one direction, which makes it difficult to house these components in the chin portion of the helmet. To house the light emitter having the shape described above in the chin portion of the helmet, a portion of the chin portion of the helmet for housing the light emitter needs to expand outward relatively greatly. Accordingly, the size of the helmet increases, and aesthetic design of appearance of the helmet is impaired.

It is therefore an object of the technique according to the present disclosure to house a light emitter in a chin portion of a helmet in an HUD device configured to be mounted on the helmet.

### SOLUTION TO THE PROBLEM

To achieve the object, in the technique disclosed here, the light emitter used in the HUD device is in such a shape that the light emitter seems to be bent in a halfway portion.

Specifically, the technique disclosed here is directed to an HUD device configured to be mounted on a helmet.

An HUD device according to the technique of the present disclosure includes a projection module configured to project display light to a projection target, the display light being used for forming a display image capable of being visually recognized as a virtual image by a user wearing the helmet through the projection target, the projection target being disposed in front of an eye of the user and having both light transmittance and light reflection. The projection module includes a light emitter and a mirror, the light emitter and the mirror being incorporated separately in left and right sides of a chin portion of the helmet, the light emitter being configured to emit display light, the mirror being configured to reflect display light emitted by the light emitter toward the projection target. The light emitter includes a light source, a first portion, and a second portion, the light emitter being configured to emit light, the first portion forming a first optical path through which light from the light source passes, the second portion being connected to a downstream side of the first optical path and forming a second optical path to which light that has passed through the first optical path is introduced, the second portion including a display element configured to generate display light by using light that has passed through the second optical path. The first portion is disposed such that the first optical path extends in one of a left-right direction or a top-bottom direction. The second portion is disposed such that the second optical path extends in another of the left-right direction or the top-bottom direction.

With this configuration, in the light emitter, light from the light source passes through the first optical path of the first portion and then through the second optical path of the second portion, and then is used by the display element. Display light generated by the display element reaches the mirror and is applied toward the projection target. For example, in a case where the first portion of the light emitter is configured such that the first optical path extends in the left-right direction and the second portion is configured such that the second optical path extends in the top-bottom direction, the light emitter is in such a shape that the light emitter seems to be bent in a halfway portion. In a case where the first optical path extends in the top-bottom direction and the second optical path extends in the left-right direction, the light emitter is also in such a shape that the light emitter seems to be bent in a halfway portion. Accordingly, the light emitter can be housed in the chin portion of helmet in a space-saving manner without the need for expanding the chin portion of the helmet outward.

In the HUD device described above, the first portion may be disposed such that the first optical path extends from a side close to the mirror to a side away from the mirror in the chin portion of the helmet, and the second portion may extend upward from a downstream side of the first optical path of the first portion.

The second portion may be configured to emit display light generated by the display element from an upper portion of the second portion toward the mirror.

The first portion may include a first light source, a second light source, and a light synthesizing member, the second light source having an optical axis in a direction different from a direction of an optical axis of the first light source, the light synthesizing member being configured to synthesize light from the first light source and light from the second light source to produce synthesized light and emit the synthesized light.

The first portion may include a plurality of lenses configured to focus light emitted from the light synthesizing member.

The light synthesizing member may be separated from the lenses in a direction in which the first optical path extends.

The technique disclosed here is directed to a helmet equipped with an HUD device.

In a helmet according to a technique according to the present disclosure, the HUD up display device includes a projection module configured to project display light to a projection target, the display light being used for forming a display image capable of being visually recognized as a virtual image by a user wearing the helmet through the projection target, the projection target being disposed in front of an eye of the user and having both light transmittance and light reflection. The projection module includes a light emitter and a mirror, the light emitter and the mirror being incorporated separately in left and right sides of a chin portion of the helmet, the light emitter being configured to emit display light, the mirror being configured to reflect display light emitted by the light emitter toward the projection target. The light emitter includes a light source, a first portion, and a second portion, the light emitter being configured to emit light, the first portion forming a first optical path through which light from the light source passes, the second portion being connected to a downstream side of the first optical path and forming a second optical path to which light that has passed through the optical path is introduced, the second portion including a display element configured to generate display light by using light that has passed through the second optical path. The first portion is disposed such that the first optical path extends in one of a left-right direction or a top-bottom direction. The second portion is disposed such that the second optical path extends in another of the left-right direction or the top-bottom direction.

With this configuration, the light emitter is configured such that one of the first portion including the light source or the second portion including the display element extends from one side in the top-bottom direction of the other portion toward the mirror. Thus, the light emitter can be housed in the chin portion of the helmet in a space-saving manner without the need for expanding the chin portion of the helmet outward.

The helmet further includes a mirror disposed in a region of the helmet body covering chin of the helmet wearer, the mirror being configured to reflect display light emitted by the light emitter toward the combiner, and the light emitter is incorporated at a right side or a left side of the mirror in the region of the helmet body covering the chin of the helmet wearer when seen from the helmet wearer.

In this configuration, since the light emitter is disposed at a position not overlapping with the mirror in the front-rear direction and the optical path of display light extends in the left-right direction, a portion of the helmet body where the mirror is disposed does not need to have a thickness corresponding to an optical path from the light emitter to the mirror. Thus, even in the case where the optical path from the light emitter to the mirror is long, a portion of the helmet body where the mirror is disposed can be made thin, as compared to a case where the light emitter is incorporated behind the mirror in the helmet body. As a result, an increase in size of the helmet can be suppressed

An antifog air duct may be disposed in a center portion in a left-right direction of the region of the helmet body covering the chin of the helmet wearer, the mirror may be disposed in a portion close to one side in the left-right direction relative to the center in the left-right direction of the region of the helmet body covering the chin of the helmet wearer, and the light emitter may be incorporated in a portion close to the one side in the left-right direction relative to the mirror and behind the mirror in the region of the helmet body covering the chin of the helmet wearer.

In this configuration, since the optical path of display light extends in the right or left portion relative to the center in the left-right direction of the region of the helmet body covering the chin of the helmet wearer, a space for allowing display light to pass therethrough does not need to be provided at the center in the left-right direction of the region of the helmet body covering the chin of the helmet wearer. Accordingly, as compared to a case where the optical path of display light is disposed at the center in the left-right direction of the region covering the chin of the helmet wearer, flexibility in the shape of an air duct can be enhanced.

The mirror may be disposed in a portion close to one side in the left-right direction relative to the center in the left-right direction of the region of the helmet body covering the chin of the helmet wearer, and the combiner may be disposed in front of one of a left eye or a right eye of the helmet wearer.

In this configuration, display light does not pass by the front of nose of the helmet wearer while traveling from the mirror to the combiner, and thus, even in a case where the mirror is disposed behind the tip of nose of the helmet wearer, the optical path of display light from the mirror to the combiner does not interfere with the nose of the helmet wearer. Thus, as compared to a case where the combiner is disposed in front of one of the left eye or the right eye of the helmet wearer, the mirror can be disposed rearward. As a result, a portion of the helmet body where the mirror is provided can be made thin, and the size of the helmet can be reduced.

### ADVANTAGES OF THE INVENTION

In the HUD device according to the technique of the present disclosure and the helmet equipped with the HUD device, the light emitter can be housed in the chin portion of the helmet in a space-saving manner. This makes it possible to reduce size while taking a balance of the helmet, and aesthetic design of appearance of the helmet is not impaired by incorporating the projection module in the chin portion of the helmet body.

### BRIEF DESCRIPTION OF THE DRAWINGS

[FIG. 1] FIG. 1 an overall configuration diagram schematically illustrating an information presentation system according to an embodiment.
[FIG. 2] FIG. 2 is a block diagram schematically showing the information presentation system according to the embodiment.
[FIG. 3] FIG. 3 is a front view of a helmet equipped with an HUD device according to the embodiment.
[FIG. 4] FIG. 4 is a side view of the helmet equipped with the HUD device according to the embodiment.
[FIG. 5] FIG. 5 is a cross-sectional view of a light emitter constituting the HUD device according to the embodiment.
[FIG. 6] FIG. 6 is a view for a second embodiment corresponding to FIG. 3.

### DESCRIPTION OF EMBODIMENTS

An exemplary embodiment will be described in detail hereinafter with reference to the drawings. In the following embodiment, in a helmet and an HUD device mounted on the helmet, the upper side and the lower side in the direction corresponding to the top-bottom direction of the face of a user wearing the helmet will be referred to as "upper" and "lower," respectively, the front side and the rear side in the direction corresponding to the front-rear direction of the face of the user wearing the helmet will be referred to as "front" and "rear," respectively, and the left side and the right side of the face of the user wearing the helmet and facing forward will be referred to as "left, and "right," respectively.

### FIRST EMBODIMENT

### <Configuration of Information Presentation System>

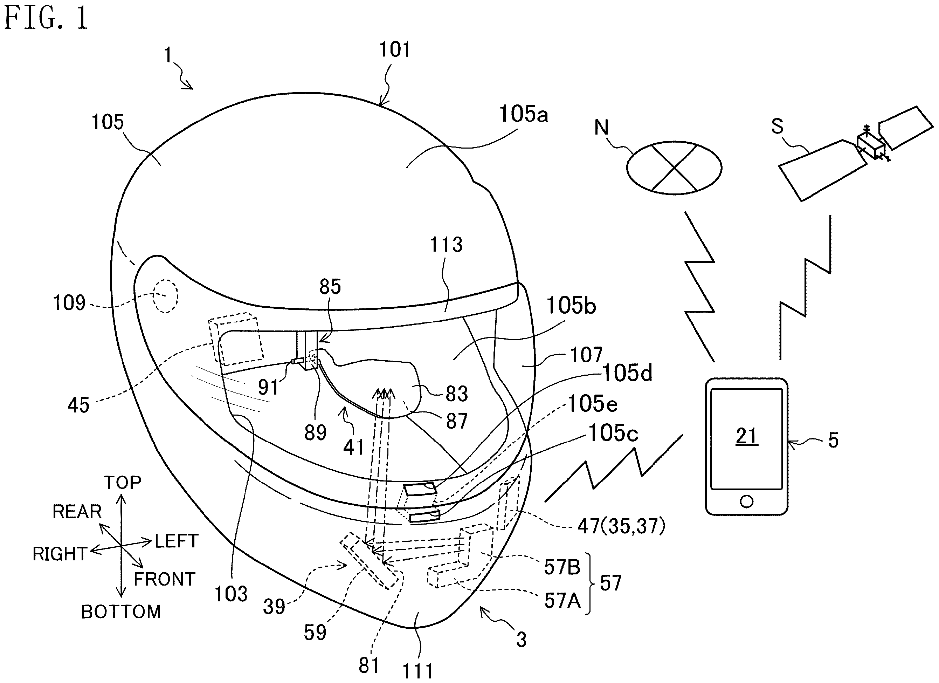

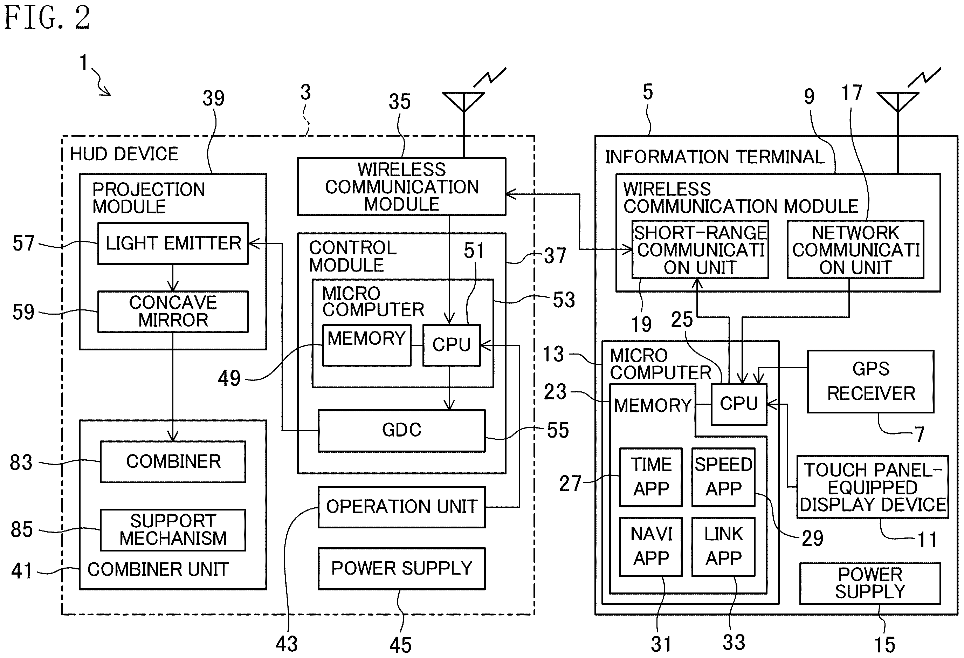

FIG. 1 an overall configuration diagram schematically illustrating an information presentation system 1 according to this embodiment. FIG. 2 is a block diagram schematically illustrating the information presentation system 1. In FIG. 1, chain double-dashed arrows represent a path and a traveling direction of display light. The information presentation system 1 is a system that presents information contributing to driving assistance to a rider (user) of a motorcycle, and includes an HUD device 3 mounted on a helmet 101 of the motorcycle, and an information terminal 5 that provides various types of information to be displayed to the HUD device 3, as illustrated in FIGS. 1 and 2.

### -Configuration of Information Terminal-

As the information terminal 5, a small-size multi-function cellular phone called a smartphone is used. The information terminal 5 includes a global positioning system (GPS) receiver 7 that receives radio waves from a GPS satellite S and generates positioning information, a wireless communication module 9 that performs wireless communication with the outside, a touch panel-equipped display device 11 serving as an input/output device, a microcomputer 13 that controls overall operation of the information terminal 5, and a power supply 15 that supplies electric power necessary for operating the information terminal 5.

The GPS receiver 7 is constituted by including an unillustrated GPS antenna and other components. The GPS antenna receives GPS signals transmitted from a plurality of GPS satellites S launched into the earth orbit. Based on the GPS signals received with the GPS antenna, the GPS receiver 7 acquires information on a current position (e.g., a latitude, a longitude, and an altitude) of the information terminal 5. The GPS receiver 7 stores the obtained positional information of the information terminal 5 in a memory 23 included in the microcomputer 13 and updates the information sequentially, in response to a request from the microcomputer 13.

The wireless communication module 9 includes a network communication unit 17 that communicates with an external network N as a wide area network, such as the Internet, and a short-range communication unit 19 that communicates with the HUD device 3 wirelessly in a short range.

The network communication unit 17 has a wireless local area network (LAN) function such as wireless fidelity (WiFi, registered trademark) and a communication function in mobile communication standards such as a long time evolution (LTE, registered trademark). In response to a request from the microcomputer 13, the network communication unit 17 receives map information from the external network N, road information concerning, for example, construction and traffic congestion, information on peripheral facilities based on the current position acquired by the GPS receiver 7, and net information such as disaster information, and temporarily stores the received information in the memory 23 included in the microcomputer 13.

The short-range communication unit 19 has a communication function in a short-range wireless communication standard such as Bluetooth (registered trademark). In response to a request from the microcomputer 13, the short-range communication unit 19 reads, from the memory 23 included in the microcomputer 13, various types of information including positional information of the information terminal 5 acquired by the GPS receiver 7, net information acquired by the network communication unit 17, application (hereinafter referred to as "app") information acquired by various types of application software described later, and long-time information on display items displayed by the HUD device 3 and display setting such as brightness, and transmits the read-out information to the HUD device 3 by wireless communication.

The touch panel-equipped display device 11 is an electronic device obtained by combining a display device that displays an image on a screen 21 of the information terminal 5 and a touch panel that detects a position (touched position) on the screen 21 touched by the user. The touch panel-equipped display device 13 has the function of outputting an image and the function of receiving a user operation. In the information terminal 5, executions of the apps and display setting in the HUD device 3 in executing the linking app 33 described later can be performed by a touch operation on the touch panel-equipped display device 11.

The microcomputer 13 includes the memory 23 and a central processing unit (CPU) 25. The memory 23 temporarily or permanently stores various types of information including programs for operating the information terminal 5. The memory 23 is typically implemented by a combination of a random access memory (RAM) and a read only memory (ROM). Various programs stored in the memory 23 include a mobile operating system (OS) and a plurality of apps that operate to implement specific functions on the mobile OS.

The plurality of apps include a time app 27, a speed app 29, a navigation app (hereinafter referred to as a "navi app") 31, and a link app 33. These apps 27, 29, 31, and 33 are previously installed in the information terminal 5 and stored in the memory 23.

The time app 27 is software for acquiring a current time. The time app 27 acquires a current time based on, for example, a time stamp acquired by communication with a base station or time information acquired by the GPS receiver 7, and further by using a time synchronization technique such as a network identity and time zone (NITZ) or a network time protocol (NTP).

The speed app 29 is software for detecting a moving speed of the information terminal 5. The speed app 29 detects a moving speed of the information terminal 5 based on, for example, positional information of the information terminal 5 acquired by the GPS receiver 7.

The navi app 31 is software for providing a route guide to a destination set by the user. The navi app 31 provides a route guide to a destination based on, for example, map information acquired by the network communication unit 17 or previously stored in the memory 23 and positional information of the information terminal 5 acquired by the GPS receiver 7.

The link app 33 is software that is linked to the HUD device 3 using wireless communication by the short-range communication unit 19 and transmits, to the HUD device 3, various types of information such as app information, net information, and information on display setting in the HUD device 3 to implement display functions in the HUD device 3. The link app 33 is used for display setting of the HUD device 3. Specifically, as the display setting, items displayed by the HUD device 3 can be selected from a plurality of items including a current time, a moving speed, and route guide information (navigation information), and brightness of a display image displayed by the HUD device 3 can be set. Information on display setting set by the link app 33 is stored in the memory 23.

The CPU 25 is typically implemented by, for example, an integrated circuit (IC), large scale integration (LSI), or an application specific integration circuit (ASIC). The CPU 25 performs computation for processing various types of data, and controls operations of the wireless communication module 9 and the touch panel-equipped display device 11 and executions of the apps 27, 29, 31, and 33.

With the function of the CPU 25, the microcomputer 13 causes the GPS receiver 7 to acquire information on a current position and the network communication unit 17 to establish connection to the external network N to collect net information, and executes the link app 33 to cause the short-range communication unit 19 to establish connection to the HUD device 3 and transmits app information, net information, and display setting information to the HUD device 3 by various processing in accordance with executions of the time app 27, the speed app 29, and navi app 31.

The power supply 15 is constituted by a secondary battery such as a lithium ion battery. The power supply 15 is electrically connected to the wireless communication module 9, the touch panel-equipped display device 11, and the microcomputer 13 through wires. When power is turned on with an unillustrated power supply switch, the information terminal 5 supplies electric power from the power supply 15 to the wireless communication module 9, the touch panel-equipped display device 11, and the microcomputer 13 so that a predetermined operation is performed in accordance with an operation by the user.

### -Configuration of HUD device-

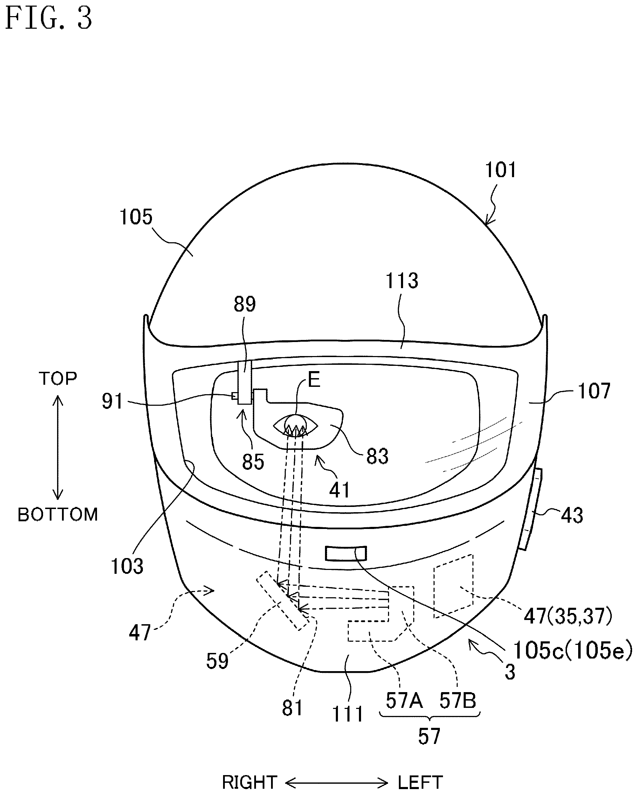

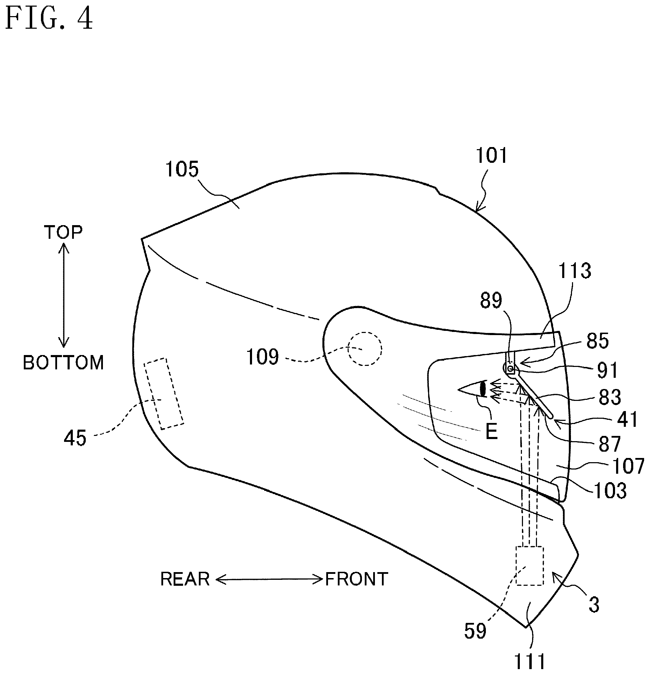

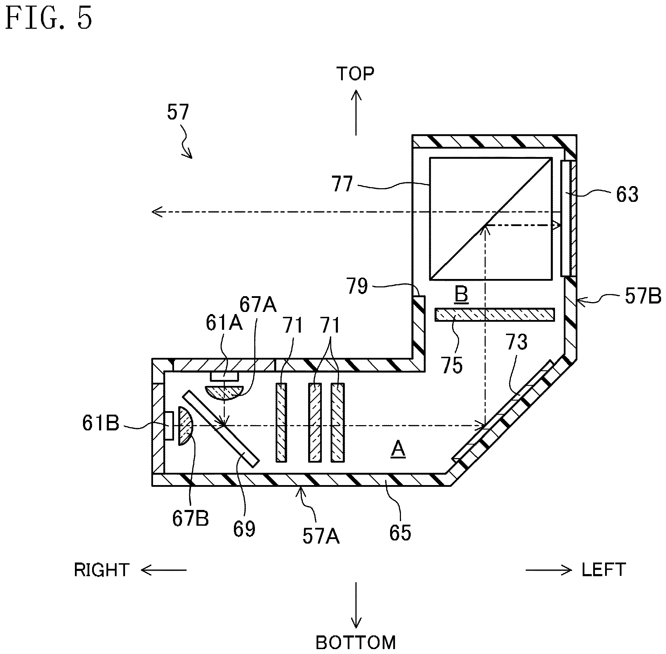

FIG. 3 is a front view of the helmet 101 equipped with the HUD device 3. FIG. 4 is a side view of the helmet 101 equipped with the HUD device 3. FIG. 5 is a cross-sectional view of a light emitter 57 constituting the HUD device 3. In FIGS. 3 and 4, chain double-dashed arrows represent a path and a traveling direction of display light, in a manner similar to FIG. 1. In FIG. 5, chain double-dashed arrows represent a path and a traveling direction of light in the emitter 57. The HUD device 3 is a projection type display device that projects visual information on the field of view of the user wearing the helmet 101.

The helmet 101 equipped with the HUD device 3 according to this embodiment is a full face helmet, and includes the helmet body 105 having, in a front portion thereof, a window opening 103 for providing a field of view to a user wearing the helmet 101, and the transparent shield 107 configured to be exchangeably attached to the helmet body 105 and to open and close the window opening.

The helmet body 105 has a configuration in which a shock absorbing liner 105b as a cushioning body made of, for example, polystyrene foam and used for absorbing shock is provided inside a shell (hat body) 105a constituting the outer hull of the helmet body 105. The shield 107 is attached to the left and right sides of the window opening 103 of the helmet body 105 with, for example, fasteners 109 to be rotatable within a predetermined angle range such that the window opening 103 is opened and closed by rotation in the top-bottom direction.

An antifog air duct 105e including air vents 105c and 105d at both ends of the air duct 105e extends in the front-rear direction in a center portion in the left-right direction of a region of the helmet body 105 covering the chin of the helmet wearer. The air vent 105c is open in a center portion in the left-right direction of a region covering the chin of the helmet wearer in the outer surface (shell 105a) of the helmet body 105, whereas the other air vent 105d is located inside the shield 107 and is open upward in a center portion in the left-right direction of a lower end surface of the window opening 103 of the helmet body 105. When the helmet wearer travels with, for example, a two-wheeled vehicle, air is guided from one air vent 105c to the other air vent 105d through the air duct 105e and hits the inner surface of the shield 107.

The shield 107 blocks foreign substances such as dust, wind, and ultraviolet radiation entering through the window opening 103 in a state where the window opening 103 is closed. The shield 107 can be removed by detaching the fasteners 109. As the shield 107, various shields having different light transmittances, such as a colorless transparent shield, a colored transparent shield exemplified by a smoke shield, or a mirror shield, in accordance with brightness of external environments depending on weather and day or night.

As illustrated in FIGS. 1 through 4, the HUD device 3 includes the wireless communication module 35 that performs wireless communication with the outside, a control module 37 that controls a display function in the HUD device 3, a projection unit 39 that generates and projects display light, a combiner unit 41 for causing a display image by display light projected from the projection unit 39 to be visually recognized as a virtual image by the user, an operation unit 43 for inputting an operation by the user to the HUD device 3, and a power supply 45 that supplies electric power necessary for operating the HUD device 3.

The wireless communication module 35 has a communication function in a short-range wireless communication standard such as Bluetooth. The wireless communication module 35 receives net information and app information from the short-range communication unit 19 of the information terminal 5 and display setting information, and stores the received information in the memory 49 included in the microcomputer 53, in response to a request from the microcomputer 53 included in the control unit 37. The wireless communication module 35 is provided on a PCB together with the control module 37, and incorporated as a PCB module 47 in a left side of the chin portion 111 of the helmet body 105.

The control module 37 controls generation of display light in a light emitter 57 included in the projection module 39. The control module 37 includes the microcomputer 53 including the memory 49 and the CPU 51, and a graphics display controller (GDC) 55 as an integrated circuit in charge of processing concerning image display.

The memory 49 temporarily or permanently stores various types of information including programs for operating the HUD device 3. The memory 49 also stores net information and app information received by the wireless communication module 35 and information on display setting. The memory 49 is typically implemented by a combination of a RAM and a ROM.

The CPU 51 is typically implemented by, for example, IC, LSI, or ASIC. The CPU 51 performs computation for processing various types of data, and controls operations of the wireless communication module 35, the projection module 39, and the GDC 55.

The GDC 55 generates data of a display image to be visually recognized by the user through the combiner 83 included in the combiner unit 41, based on net information and app information stored in the memory 49 and display setting information. Data of the display image generated by the GDC 55 is image data representing information of items set in display setting o the link app 33 of the information terminal 5. With the function of the CPU 51, the microcomputer 53 causes the GDC 55 to generate data of a display image and output a signal of the image to the light emitter 57 included in the projection module 39.

The projection module 39 is incorporated in the chin portion 111 of the helmet body 105. The projection module 39 includes the light emitter 57 that generates and emits display light corresponding to a display image based on an image signal input from the GDC 55, and a concave mirror 59 that reflects display light emitted from the light emitter 57 toward the combiner 83 included in the combiner unit 41. The light emitter 57 and the concave mirror 59 are provided separately in the right and left sides of the chin portion 111 of the helmet 101. The light emitter 57 is incorporated in the right side or the left side of the mirror 59 covering the chin of the helmet wearer in the helmet body 105, when seen from the helmet wearer. In this example, the light emitter 57 is disposed in the left side, but may be disposed in the right side. The light emitter 57 and the mirror 59 are provided at positions that do not overlap with each other in the front-rear direction. In addition, the light emitter 57 is incorporated in a portion of the helmet body 105 behind the mirror 59.

The mirror 59 is disposed in a portion close to one side in the left-right direction relative to the center in the left-right direction in a region of the helmet body 105 covering the chin of the helmet wearer. In this example, the mirror 59 is disposed in a rightward portion, but may be disposed in a leftward portion. The combiner 57 is provided in front of one of the left eye or the right eye of the helmet wearer. In this example, in a manner similar to the mirror 59, the combiner 57 is provided in a rightward portion, but may be provided in a leftward portion.

The light emitter 57 is incorporated in the left of the chin portion 111 of the helmet body 105 and near the PCB module 47. The light emitter 57 generates display light with a light intensity with which a display image displayed by the HUD device 3 is at a brightness level set by the information terminal 5, and emits the generated display light toward the concave mirror 59. As illustrated in FIG. 5, the light emitter 57 includes a case 65 for housing optical members. The case 65 includes a first portion 57A elongated in the left-right direction, and a second portion 57B projecting upward from the left side of the first portion 57A, and has a shape that is bent at a right angle in an approximately halfway portion in the left-right direction as a whole. The right side of the first portion 57A is located at the center in the left-right direction or near the center of the chin portion 111, or at the left of the center in the left-right direction. The right side of the first portion 57A may be located at the right of the center portion in the left-right direction. The left side of the first portion 57A is located at the left of the center in the left-right direction of the chin portion 111. The first portion 57A and the second portion 57B may be integrally formed, or may be united after being formed as separate members.

The first portion 57A includes a first light emitting diode (LED) 61A and a second LED 61B as light sources for emitting light, a first collimator lens 67A, a second collimator lens 67B, a light synthesizing member 69, and a plurality of lenses 71. The first LED 61A, the second LED 61B, the first collimator lens 67A, the light synthesizing member 69, the second collimator lens 67B, and the lenses 71 are housed in the first portion 57A, and retained by the first portion 57A.

The first LED 61A and the second LED 61B are disposed at the opposite side (right side) to the second portion 57B in the first portion 57A, and are disposed such that optical axes thereof are orthogonal to each other. Specifically, the first LED 61A is fixed to the inner surface of an upper wall of the first portion 57A in a posture in which the optical axis faces downward. The second LED 61B has an optical axis in a direction different from that of the first LED 61A, and the optical axis of the second LED 61B is oriented toward the left. Thus, the second LED 61B is fixed to the inner surface of a right end wall of the first portion 57A in a posture in which the optical axis is oriented toward the left. The directions of the optical axes of the first LED 61A and the second LED 61B are not limited to the directions described above, and the first LED 61A may be fixed to the inner surface of the lower wall of the first portion 57A with the optical axis of the first LED 61A facing upward.

The first collimator lens 67A faces the light emission surface of the first LED 61A at a predetermined distance, and is fixed in the right side of the first portion 57A. The second collimator lens 67B faces the light emission surface of the second LED 61B at a predetermined distance, and is fixed in the right side of the first portion 57A. The light synthesizing member 69 is constituted by an optical member such as a dichroic mirror, and synthesizes light that has been emitted from the first LED 61A and passed through the first collimator lens 67A and light that has been emitted from the second LED 61B and passed through the second collimator lens 67B. The light synthesizing member 69 is disposed between the first collimator lens 67A and the second collimator lens 67B, and is fixed in the right side of the first portion 57A. The light synthesizing member 69 causes the optical axis in the first portion 57A to extend from the right to the left. Specifically, in the first portion 57A, a first optical path A in which light from the first LED 61A and the second LED 61B passes extends from the right to the left, the upstream side of the first optical path A is the right side, and the downstream side is the left side. The first portion 57A is configured such that the first optical path A extends from a side toward the concave mirror 59 (right side) to a side away from the concave mirror 59 (left side) in the chin portion 111 of the helmet body 105.

The lenses 71 are optical members for, for example, focusing light from the LEDs 61A and 61B synthesized by the light synthesizing member 69, and three lenses 71 are provided. However, the present disclose is not limited to this example, and the number of lenses 71 may be two or less, or four or more. The lenses 71 are disposed with intervals in the direction in which the first optical path A extends. The lenses 71 are disposed away from the light synthesizing member 69 to the left, and are arranged with intervals from the light synthesizing member 69 in the direction in which the first optical path A extends.

The second portion 57B is connected to the downstream side of the first optical path A, and forms a second optical path B to which light that has passed through the first optical path A is introduced. In this embodiment, the second portion 57B projects upward from the left side of the first portion 57A, and thus, the second optical path B extends upward. A mirror 73 for reflecting light that has passed through the plurality of lenses 71 in the first portion 57A at right angles to a direction along the longitudinal direction of the second portion 57Bt is provided in a portion shared by the first portion 57A and the second portion 57B, that is, a left end portion of the first portion 57A and a lower end portion of the second portion 57B.

The second portion 57B includes a display element 63 that generates display light by using light that has passed through the second optical path B. In the second portion 57B, the display element 63 is fixed at a position opposite to the first portion 57A, that is, at the left wall. The second portion 57B houses, in addition to the display element 63, a lens 75 for, for example, focusing light reflected by the mirror 73, and a cube-type polarizing beam splitter (PBS) 77 on which light that has passed through the lens 75 is incident. Light reflected by the mirror 73 enters the lower surface of the polarizing beam splitter 77. When light reflected by the mirror 73 enters the polarizing beam splitter 77, the light is emitted from the left side surface. Thus, in an upper portion of the second portion 57B, an optical path is formed to extend in the left-right direction.

The display element 63 is a reflection type display panel such as a liquid crystal on silicon (LCOS) panel. The display surface of the display element 63 faces rightward. The display surface of the display element 63 faces the left side surface adj acent to the lower surface of the polarizing beam splitter 77 that is a light incident side, with a predetermined gap interposed therebetween. Display light generated by the display element 63 enters the left side surface of the polarizing beam splitter 77 and is emitted from the right side surface. The case 65 of the second portion 57B has a light emission port 79 from which display light generated by the display element 63 is emitted. The light emission port 79 is located at a position opposite to the display element 63 with respect to the polarizing beam splitter 77. The light emission port 79 is open toward the concave mirror 59 in a direction along the longitudinal direction of the first portion 57A. That is, the second portion 57B is configured such that display light generated by the display element 63 is emitted toward the concave mirror 59 from an upper portion of the second portion 57B. The lens 75 is disposed between the mirror 73 and the polarizing beam splitter 77, and fixed in the second portion 57B. A plurality of lenses 75 may be provided.

In the light emitter 57 described above, light emitted from the first LED 61A and the second LED 61B passes through the first collimator lens 67A and the second collimator lens 67B, respectively, and is synthesized by the light synthesizing member 69, and the synthesized light travels to the left in the first optical path A. Light traveling in the first optical path A is, for example, focused through the plurality of lenses 71 in the first portion 57A. The thus-focused light is reflected by the mirror 73 toward an upper portion of the second portion 57B and focused through the lens 75, for example, and then, divided by the polarizing beam splitter 77 into S-polarized light and P-polarized light. Only the S-polarized light is reflected to the display element 63. Display light emitted by the display element 63 in response to the S-polarized light is P-polarized light, and thus, the P-polarized light passes through the polarizing beam splitter 77 and is emitted toward the concave mirror 59 from the light emission port 79.

The concave mirror 59 is incorporated in a right side relative to a center portion in the left-right direction of the chin portion 111 of the helmet body 105. Accordingly, the concave mirror 59 and the light emitter 57 are spaced from each other in the left-right direction. The concave mirror 59 has a reflection surface 81 of a free-form surface shape (flat shape in the drawings) without rotational symmetry. The concave mirror 59 reflects display light received from the light emitter 57 on the reflection surface 81 toward the combiner 83 included in the combiner unit 41 located above, and shapes a display image visually recognized by the user in a size at a position suitable for display during driving.

The combiner unit 41 includes the combiner 83 that receives display light reflected by the concave mirror 59 from below and reflects the display light to a direction in which the display light can be visually recognized by the user, and a support mechanism 85 that supports the combiner 83 in a position in front of an eye of the user wearing the helmet 101.

The combiner 83 is a transparent or translucent plate-shaped part, and has a semi-transmissive reflection surface 87 of a free-form surface shape without rotational symmetry (flat plate shape in the drawings). The combiner 83 is disposed inside the shield 107 in a closed state. The combiner 83 is a projection target having both light transmittance and light reflection, and is constituted by a semitransparent mirror. The semitransparent mirror has the property of reflecting part of incident light and being transmissive part of the incident light.

The support mechanism 85 supports the combiner 83 at a position within the forward field of view of the user in the window opening 103 in a front portion of the helmet body 105. The combiner 83 is disposed in front of the right eye E of the user, and is supported by the support mechanism 85 in a forward leaning posture in which the semi-transmissive reflection surface 87 is located at the face side of the user, the rear end is located above, and the front end is located below.

The support mechanism 84 includes a stay 89 extending in the top-bottom direction. An upper portion of the stay 89 is retained by an unillustrated holder incorporated in the forehead portion 113 of the helmet body 105. A lower end of the stay 89 is coupled to the combiner 83 through a rotation shaft 91 extending in the left-right direction. The support mechanism 85 can adjust orientation of the semi-transmissive reflection surface 87 by rotation of the combiner 83 about the rotation shaft 91.

Although not shown, the operation unit 43 is provided at a location corresponding to the PCB module 47 of the helmet body 105. Although not shown, the operation unit 43 includes a power supply switch and an operation switch. The power supply switch is a push-button switch having the function of switching the power supply of the HUD device 3 between on and off. The operation switch is a push-button switch having the function of switching display of the HUD device 3 between on and off.

The power supply 45 is incorporated in an occipital portion of the helmet body 105. The power supply 45 is constituted by a secondary battery such as a lithium ion battery. The power supply 45 is electrically connected to the wireless communication module 35, the control module 37, and the light emitter 57. When the power supply switch is turned on in the operation unit 43, the HUD device 3 supplies electric power from the power supply 45 to the wireless communication module 35, the control module 37, and the light emitter 57 and performs a display operation depending on switching between on and off of display by operation of the operation switch.

### <Operation of Information Presentation System>

In the information presentation system 1 having the configuration described above, when the power supply of the HUD device 3 is turned on and the link app 33 is executed in the information terminal 5, net information, app information, and display setting information are received by the HUD device 3. Then, based on the received net information and app information, data of a display image corresponding to previously set items included in the display setting information are generated by the GDC 55. At this time, if display of the HUD device 3 is on, in the light emitter 57, display light corresponding to data of the display image generated by the GDC 55 is generated with an intensity of light corresponding to a brightness level of a display image set in the information terminal 5. This display light is emitted from the light emitter 57, then reflected on the concave mirror 59, projected into the combiner 83, and then further reflected by the combiner 83 to fall within the field of view of the user. Accordingly, the user visually recognizes a display image by display light as a virtual image with the virtual image superimposed on the scenery in the forward field of view through the combiner 83.

In the HUD device 3 according to this embodiment, since the first portion 57A including the LED 61 extends from a portion below the second portion 57B including the display element 63 toward the concave mirror 59 in the light emitter 57, the light emitter 57 can be housed in the chin portion 111 of the helmet body 105 in a space-saving manner without the need for expanding the chin portion 111 of the helmet body 105 outward. This makes it possible to reduce size while taking a balance of the helmet body 105, and aesthetic design of appearance of the helmet 101 is not impaired by incorporating the projection module 39 in the chin portion 111 of the helmet body 105.

In the foregoing description, a preferred embodiment has been described as an example of the technique of the present disclosure. The technique disclosed here is, however, not limited to this embodiment, and is also applicable to other embodiments obtained by changes, replacements, additions, and/or omissions as necessary. Components provided in the accompanying drawings and the detailed description can include components unnecessary for solving problems. Therefore, it should not be concluded that such unnecessary components are necessary only because these unnecessary components are included in the accompanying drawings or the detailed description.

### SECOND EMBODIMENT

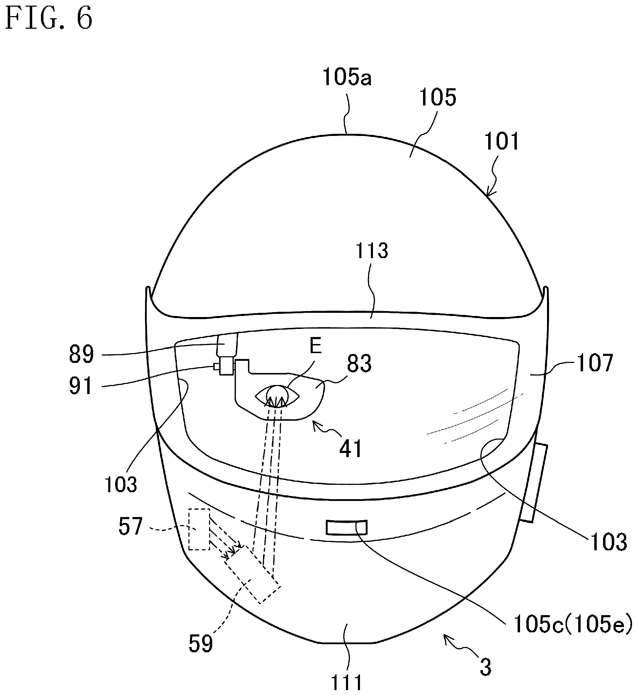

FIG. 6 illustrates a helmet 101 according to a second embodiment of the present disclosure. In the second embodiment, a light emitter 57 is incorporated in a portion at the right of a concave mirror 59 and behind the concave mirror 59 in a region of a helmet body 105 covering the chin of a helmet wearer. The light emitter 57 is configured to emit display light LX obliquely forward to the left in the helmet body 105.

The other part of the configuration is the same as that in the first embodiment, and thus, the same components are denoted by the same reference characters, and detailed description thereof will not be repeated.

Thus, in the second embodiment, an optical path of display light LX extends in a right portion relative to the center in the left-right direction of a region of the helmet body 105 covering the chin of the helmet wearer. Thus, space for allowing display light LX to pass therethrough does not need to be provided at the center in the left-right direction of the region of the helmet body 105 covering the chin of the helmet wearer. Accordingly, as compared to a case where the optical path of display light LX is disposed at the center in the left-right direction of the region covering the chin of the helmet wearer, flexibility in the shape of an air duct 105e can be enhanced.

In the first and second embodiments described above, the combiner 83 is provided in front of the right eye E of the helmet wearer, and the concave mirror 59 is incorporated in a right portion relative to the center in the left-right direction of the region of the helmet body 105 covering the chin of the helmet wearer. Alternatively, the combiner 83 may be provided in front of the left eye of the helmet wearer with the concave mirror 59 being incorporated in a left portion relative to the center in the left-right direction of the region of the helmet body 105 covering the chin of the helmet wearer. In this case, the light emitter 57 may be incorporated at the right of the concave mirror 59 in the region of the helmet body 105 covering the chin of the helmet wearer, or may be incorporated at the left of the concave mirror 59 and behind the concave mirror 59.

For example, the above embodiments may be configured as described below.

In the configuration of the light emitter 57 described as an example in the embodiments, the longitudinal direction of the first portion 57A extends along the left-right direction, the longitudinal direction of the second portion 57B extends along the top-bottom direction, and the first portion 57A is disposed below the second portion 57B. The technique disclosed here is, however, not limited to this example. As long as display light is emitted toward the concave mirror 59, the light emitter 57 may be oriented such that the longitudinal direction of the first portion 57A extends along the top-bottom direction, the longitudinal direction of the second portion 57B extends along the left-right direction, and/or the first portion 57A may be disposed above the second portion 57B. That is, the light emitter 57 only needs to have a configuration in which one of the first portion 57A or the second portion 57B extends from one end of the other portion in the top-bottom direction toward the concave mirror 59.

In the above embodiment, the configuration of the HUD device 3 in which display light is projected from the projection module 39 to the combiner 83 provided as a projection target different from the shield 107 of the helmet 101 is described as an example. The technique disclosed here is, however, not limited to this example. As an alternative example, the HUD device 3 may use the shield 107 of the helmet 101 as a projection target instead of the combiner 83 and project display light from the projection module 39 to the shield 107 so that a display image by display light is displayed as a virtual image while being superimposed on scenery in the forward field of view through the shield 107.

In the embodiment describe above, a smartphone is used as an example of the information terminal 5 linked to the HUD device 3. The technique disclosed here is, however, not limited to this example. The information terminal 5 may be a terminal having functions similar to those of a smartphone such as a smartwatch, a tablet terminal, or a personal data assistant (PDA), or may be another portable information terminal as long as the terminal has the function of connecting to the external network N, includes the GPS receiver 7, and is capable of communicating with the HUD device 3. Instead of or in addition to the information terminal 5, the HUD device 3 may communicate with a motorcycle, receive detection information by various sensors mounted on the motorcycle, and provides a display image.

In the embodiment describe above, the reflection type display panel such as liquid crystal on silicon (LCOS) is described as an example display element 63 used for the light emitter 57. The technique disclosed here is, however, not limited to this example. As the display element 63 of the light emitter 57, a self-luminous display element such as an organic electro luminescence (EL) display panel or a vacuum fluorescent display (VFD) may be used.

In the embodiments describe above, the projection module 39 includes the concave mirror 59. The technique disclosed here is, however, not limited to this example. The projection module 39 may include a convex mirror a plane mirror, instead of the concave mirror 59.

In the embodiments describe above, information presented as a display image to the user by the HUD device 3 is information on a current time, a speed, and a route guide. The technique disclosed here is, however, not limited to this example. The information on the current time, the speed, and the route guide is merely an example of information that can be presented by the HUD device 3 and may be other information contributing to driving of a motorcycle. Other information useful for the user, such as information on peripheral facilities near a running region, may be used as items displayed by the HUD device 3 by, for example, setting with the link app 33 of the information terminal 5.

In the embodiments describe above, the helmet 101 worn in driving of a motorcycle is described as an example of the helmet 101 equipped with the HUD device 3. The technique disclosed here is, however, not limited to this example. The HUD device 3 is, of course, applicable to helmets used for two-wheeled vehicles including personal watercrafts and bicycles and other vehicles such as snowmobiles (snow bikes).

### INDUSTRIAL APPLICABILITY

As described above, the technique disclosed here is useful for an HUD device mounted on a helmet and a helmet on which equipped with an HUD device.

### DESCRIPTION OF REFERENCE CHARACTERS

- E: user's eye
- N: external network
- S: GPS satellite
- 1: information presentation system
- 3: HUD device
- 5: information terminal
- 7: GPS receiver
- 9: wireless communication module
- 11: touch panel-equipped display device
- 13: microcomputer
- 15: power supply
- 17: network communication unit
- 19: short-range communication unit
- 21: screen
- 23: memory
- 25: CPU
- 27: time app
- 29: speed app
- 31: navi app
- 33: link app
- 35: wireless communication module
- 37: control module
- 39: projection module
- 41: combiner unit
- 43: operation unit
- 45: power supply
- 47: PCB module
- 49: memory
- 51: CPU
- 53: microcomputer
- 55: GDC
- 57: light emitter
- 57A: first portion
- 57B: second portion
- 59: concave mirror
- 61: LED (light source)
- 63: display element
- 65: case
- 67: collimator lens
- 69: light synthesizing member
- 71: lens
- 73: mirror75 lens
- 77: polarizing beam splitter
- 79: light emission port
- 81: reflection surface
- 83: combiner (projection target)
- 85: support mechanism
- 87: semi-transmissive reflection surface
- 89: stay
- 91: rotation shaft
- 101: helmet
- 103: window opening
- 105: helmet body
- 107: shield
- 109: fastener
- 111: chin portion
- 113: forehead portion

## Claims

1. A head-up display device (3) configured to be mounted on a helmet (101), the head-up display device (3) comprising
a projection module (39) configured to project display light to a projection target (83), the display light being used for forming a display image capable of being visually recognized as a virtual image by a user wearing the helmet (101) through the projection target (83), the projection target (83) being disposed in front of an eye (E) of the user and having both light transmittance and light reflection, wherein
the projection module (39) includes a light emitter (57) and a mirror (59), the light emitter (57) and the mirror (59) being incorporated separately in left and right sides of a chin portion (111) of the helmet (101), the light emitter (57) being configured to emit display light, the mirror (59) being configured to reflect display light emitted by the light emitter (57) toward the projection target (83), **characterized in that**
the mirror (59) is disposed in a portion close to one side relative to a center in a left-right direction of the helmet (101),
the light emitter (57) includes a light source (61A, 61B), a first portion (57A), and a second portion (57B), the light emitter (57) being configured to emit light, the first portion (57A) forming a first optical path (A) through which light from the light source (61A, 61B) passes, the second portion (57B) being connected to a downstream side of the first optical path (A) and forming a second optical path (B) to which light that has passed through the first optical path (A) is introduced, the second portion (57B) including a display element (63) configured to generate display light by using light that has passed through the second optical path (B),
the first portion (57A) and the second portion (57B) are disposed in portions close to another side relative to the center in the left-right direction of the helmet (101),
the first portion (57A) is disposed such that the first optical path (A) extends in one of a left-right direction or a top-bottom direction, and
the second portion (57B) is disposed such that the second optical path (B) extends in another of the left-right direction or the top-bottom direction.

2. The head-up display device (3) according to claim 1, wherein
the first portion (57A) is disposed such that the first optical path (A) extends from a side close to the mirror (59) to a side away from the mirror (59) in the chin portion (111) of the helmet (101), and
the second portion (57B) extends upward from a downstream side of the first optical path (A) of the first portion (57A).

3. The head-up display device (3) according to claim 2, wherein
the second portion (57B) is configured to emit display light generated by the display element (63) from an upper portion of the second portion (57B) toward the mirror (59).

4. The head-up display device (3) according to any one of claims 1 to 3, wherein
the first portion (57A) includes a first light source (61A), a second light source (61B), and a light synthesizing member (69), the second light source (61B) having an optical axis in a direction different from a direction of an optical axis of the first light source (61A), the light synthesizing member (69) being configured to synthesize light from the first light source (61A) and light from the second light source (61B) to produce synthesized light and emit the synthesized light.

5. The head-up display device (3) according to claim 4, wherein
the first portion (57A) includes a plurality of lenses (71) configured to focus light emitted from the light synthesizing member (69).

6. The head-up display device (3) according to claim 5, wherein
the light synthesizing member (69) is separated from the lenses (71) in a direction in which the first optical path (A) extends.

7. A helmet (101) equipped with a head-up display device (3), wherein
the head-up display device (3) includes a projection module (39) configured to project display light to a projection target (83), the display light being used for forming a display image capable of being visually recognized as a virtual image by a user wearing the helmet (101) through the projection target (83), the projection target (83) being disposed in front of an eye (E) of the user and having both light transmittance and light reflection,
the projection module (39) includes a light emitter (57) and a mirror (59), the light emitter (57) and the mirror (59) being incorporated separately in left and right sides of a chin portion (111) of the helmet (101), the light emitter (57) being configured to emit display light, the mirror (59) being configured to reflect display light emitted by the light emitter (57) toward the projection target (83), **characterized in that**
the mirror (59) is disposed in a portion close to one side relative to a center in a left-right direction of the helmet (101),
the light emitter (57) includes a light source (61A, 61B), a first portion (57A), and a second portion (57B), the light emitter (57) being configured to emit light, the first portion (57A) forming a first optical path (A) through which light from the light source (61A, 61B) passes, the second portion (57B) being connected to a downstream side of the first optical path (A) and forming a second optical path (B) to which light that has passed through the optical path (A) is introduced, the second portion (57B) including a display element (63) configured to generate display light by using light that has passed through the second optical path (B),
the first portion (57A) and the second portion (57B) are disposed in portions close to another side relative to the center in the left-right direction of the helmet (101),
the first portion (57A) is disposed such that the first optical path (A) extends in one of a left-right direction or a top-bottom direction, and
the second portion (57B) is disposed such that the second optical path (B) extends in another of the left-right direction or the top-bottom direction.

## Patentansprüche

1. Head-up-Anzeigevorrichtung (3), die zur Montage an einem Helm (101) konfiguriert ist, wobei die Head-up-Anzeigevorrichtung (3) umfasst:
ein Projektionsmodul (39), das so konfiguriert ist, dass es Anzeigelicht auf ein Projektionsziel (83) projiziert, wobei das Anzeigelicht zum Erzeugen eines Anzeigebilds verwendet wird, das von einem Benutzer, der den Helm (101) trägt, durch das Projektionsziel (83) visuell als ein virtuelles Bild erkannt werden kann, wobei das Projektionsziel (83) vor einem Auge (E) des Benutzers angeordnet ist und sowohl Lichtdurchlässigkeit als auch Lichtreflexion aufweist, wobei
das Projektionsmodul (39) einen Lichtemitter (57) und einen Spiegel (59) beinhaltet, wobei der Lichtemitter (57) und der Spiegel (59) getrennt in die linke und rechte Seite eines Kinnabschnitts (111) des Helms (101) eingebaut sind, wobei der Lichtemitter (57) so konfiguriert ist, dass er Anzeigelicht emittiert, und der Spiegel (59) so konfiguriert ist, dass er vom Lichtemitter (57) emittiertes Anzeigelicht in Richtung des Projektionsziels (83) reflektiert, **dadurch gekennzeichnet, dass**
der Spiegel (59) in einem Abschnitt nahe einer Seite relativ zu einer Mitte in einer Links-Rechts-Richtung des Helms (101) angeordnet ist,
der Lichtemitter (57) eine Lichtquelle (61A, 61B), einen ersten Abschnitt (57A) und einen zweiten Abschnitt (57B) beinhaltet, wobei der Lichtemitter (57) so konfiguriert ist, dass er Licht emittiert, wobei der erste Abschnitt (57A) einen ersten Lichtweg (A) bildet, durch den Licht von der Lichtquelle (61A, 61B) hindurchgeht, wobei der zweite Abschnitt (57B) mit einer stromabwärtigen Seite des ersten Lichtwegs (A) verbunden ist und einen zweiten Lichtweg (B) bildet, in den Licht eingeführt wird, das durch den ersten Lichtweg (A) hindurchgegangen ist, wobei der zweite Abschnitt (57B) ein Anzeigeelement (63) beinhaltet, das so konfiguriert ist, dass es Anzeigelicht unter Verwendung von Licht erzeugt, das durch den zweiten Lichtweg (B) hindurchgegangen ist,
der erste Abschnitt (57A) und der zweite Abschnitt (57B) in Abschnitten nahe einer anderen Seite relativ zur Mitte in der Links-Rechts-Richtung des Helms (101) angeordnet sind,
der erste Abschnitt (57A) so angeordnet ist, dass sich der erste Lichtweg (A) entweder in einer Links-Rechts-Richtung oder einer Oben-Unten-Richtung erstreckt, und
der zweite Abschnitt (57B) so angeordnet ist, dass sich der zweite Lichtweg (B) entweder in der Links-Rechts-Richtung oder der Oben-Unten-Richtung erstreckt.

2. Head-up-Anzeigevorrichtung (3) nach Anspruch 1, wobei
der erste Abschnitt (57A) so angeordnet ist, dass sich der erste Lichtweg (A) von einer Seite nahe dem Spiegel (59) zu einer Seite abseits des Spiegels (59) im Kinnabschnitt (111) des Helms (101) erstreckt und
der zweite Abschnitt (57B) sich von einer stromabwärtigen Seite des ersten Lichtwegs (A) des ersten Abschnitts (57A) nach oben erstreckt.

3. Head-up-Anzeigevorrichtung (3) nach Anspruch 2, wobei
der zweite Abschnitt (57B) so konfiguriert ist, dass er vom Anzeigeelement (63) erzeugtes Anzeigelicht von einem oberen Abschnitt des zweiten Abschnitts (57B) in Richtung des Spiegels (59) emittiert.

4. Head-up-Anzeigevorrichtung (3) nach einem der Ansprüche 1 bis 3, wobei
der erste Abschnitt (57A) eine erste Lichtquelle (61A), eine zweite Lichtquelle (61B) und ein Lichtsynthetisierungsteil (69) beinhaltet, wobei die zweite Lichtquelle (61B) eine optische Achse in einer Richtung aufweist, die sich von einer Richtung einer optischen Achse der ersten Lichtquelle (61A) unterscheidet, wobei das Lichtsynthetisierungsteil (69) konfiguriert ist, um Licht von der ersten Lichtquelle (61A) und Licht von der zweiten Lichtquelle (61B) zu synthetisieren, um synthetisiertes Licht zu erzeugen und das synthetisierte Licht zu emittieren.

5. Head-up-Anzeigevorrichtung (3) nach Anspruch 4, wobei
der erste Abschnitt (57A) eine Vielzahl von Linsen (71) beinhaltet, die so konfiguriert sind, dass sie das vom Lichtsynthetisierungsteil (69) emittierte Licht fokussieren.

6. Head-up-Anzeigevorrichtung (3) nach Anspruch 5, wobei
das Lichtsynthetisierungsteil (69) von den Linsen (71) in einer Richtung getrennt ist, in der sich der erste Lichtweg (A) erstreckt.

7. Helm (101), der mit einer Head-Up-Anzeigevorrichtung (3) ausgestattet ist, wobei
die Head-up-Anzeigevorrichtung (3) ein Projektionsmodul (39) beinhaltet, das zum Projizieren von Anzeigelicht auf ein Projektionsziel (83) konfiguriert ist, wobei das Anzeigelicht zur Bildung eines Anzeigebildes verwendet wird, das von einem Benutzer, der den Helm (101) trägt, durch das Projektionsziel (83) visuell als ein virtuelles Bild erkannt werden kann, wobei das Projektionsziel (83) vor einem Auge (E) des Benutzers angeordnet ist und sowohl Lichtdurchlässigkeit als auch Lichtreflexion aufweist,
das Projektionsmodul (39) einen Lichtemitter (57) und einen Spiegel (59) beinhaltet, wobei der Lichtemitter (57) und der Spiegel (59) getrennt in die linke und rechte Seite eines Kinnabschnitts (111) des Helms (101) eingebaut sind, wobei der Lichtemitter (57) so konfiguriert ist, dass er Anzeigelicht emittiert, und der Spiegel (59) so konfiguriert ist, dass er vom Lichtemitter (57) emittiertes Anzeigelicht in Richtung des Projektionsziels (83) reflektiert, **dadurch gekennzeichnet, dass**
der Spiegel (59) in einem Abschnitt nahe einer Seite relativ zu einer Mitte in einer Links-Rechts-Richtung des Helms (101) angeordnet ist,
der Lichtemitter (57) eine Lichtquelle (61A, 61B), einen ersten Abschnitt (57A) und einen zweiten Abschnitt (57B) beinhaltet, wobei der Lichtemitter (57) so konfiguriert ist, dass er Licht emittiert, wobei der erste Abschnitt (57A) einen ersten Lichtweg (A) bildet, durch den Licht von der Lichtquelle (61A, 61B) hindurchgeht, wobei der zweite Abschnitt (57B) mit einer stromabwärtigen Seite des ersten Lichtweges (A) verbunden ist und einen zweiten Lichtweg (B) bildet, in den Licht, das durch den Lichtweg (A) hindurchgegangen ist, eingeführt wird, wobei der zweite Abschnitt (57B) ein Anzeigeelement (63) beinhaltet, das so konfiguriert ist, dass es Anzeigelicht unter Verwendung von Licht erzeugt, das durch den zweiten Lichtweg (B) hindurchgegangen ist,
der erste Abschnitt (57A) und der zweite Abschnitt (57B) in Abschnitten nahe einer anderen Seite relativ zur Mitte in der Links-Rechts-Richtung des Helms (101) angeordnet sind,
der erste Abschnitt (57A) so angeordnet ist, dass sich der erste Lichtweg (A) entweder in einer Links-Rechts-Richtung oder einer Oben-Unten-Richtung erstreckt, und
der zweite Abschnitt (57B) so angeordnet ist, dass sich der zweite Lichtweg (B) entweder in der Links-Rechts-Richtung oder der Oben-Unten-Richtung erstreckt.

## Revendications

1. Dispositif d'affichage tête haute (3) configuré pour être monté sur un casque (101), le dispositif d'affichage tête haute (3) comprenant
un module de projection (39) configuré pour projeter une lumière d'affichage sur une cible de projection (83), la lumière d'affichage étant utilisée pour former une image d'affichage capable d'être reconnue visuellement comme une image virtuelle par un utilisateur portant le casque (101) à travers la cible de projection (83), la cible de projection (83) étant disposée devant un oeil (E) de l'utilisateur et présentant à la fois une transmission de lumière et une réflexion de lumière, dans lequel
le module de projection (39) inclut un émetteur de lumière (57) et un miroir (59), l'émetteur de lumière (57) et le miroir (59) étant incorporés séparément sur les côtés gauche et droit d'une partie de menton (111) du casque (101), l'émetteur de lumière (57) étant configuré pour émettre une lumière d'affichage, le miroir (59) étant configuré pour réfléchir la lumière d'affichage émise par l'émetteur de lumière (57) vers la cible de projection (83), **caractérisé en ce que**
le miroir (59) est disposé dans une partie proche d'un premier côté par rapport à un centre dans une direction gauche-droite du casque (101),
l'émetteur de lumière (57) inclut une source de lumière (61A, 61B), une première partie (57A) et une seconde partie (57B), l'émetteur de lumière (57) étant configuré pour émettre de la lumière, la première partie (57A) formant un premier trajet optique (A) à travers lequel passe la lumière provenant de la source de lumière (61A, 61B), la seconde partie (57B) étant connectée à un côté aval du premier trajet optique (A) et formant un second trajet optique (B) dans lequel la lumière qui est passée à travers le premier trajet optique (A) est introduite, la seconde partie (57B) incluant un élément d'affichage (63) configuré pour générer une lumière d'affichage en utilisant la lumière qui est passée à travers le second trajet optique (B),
la première partie (57A) et la seconde partie (57B) sont disposées dans des parties proches d'un autre côté par rapport au centre dans la direction gauche-droite du casque (101),
la première partie (57A) est disposée de telle sorte que le premier trajet optique (A) s'étend dans une parmi une direction gauche-droite ou une direction haut-bas, et
la seconde partie (57B) est disposée de telle sorte que le second trajet optique (B) s'étend dans une autre parmi la direction gauche-droite ou la direction haut-bas.

2. Dispositif d'affichage tête haute (3) selon la revendication 1, dans lequel
la première partie (57A) est disposée de telle sorte que le premier trajet optique (A) s'étend d'un côté proche du miroir (59) vers un côté éloigné du miroir (59) dans la partie de menton (111) du casque (101), et
la seconde partie (57B) s'étend vers le haut depuis un côté aval du premier trajet optique (A) de la première partie (57A).

3. Dispositif d'affichage tête haute (3) selon la revendication 2, dans lequel
la seconde partie (57B) est configurée pour émettre une lumière d'affichage générée par l'élément d'affichage (63) depuis une partie supérieure de la seconde partie (57B) vers le miroir (59).

4. Dispositif d'affichage tête haute (3) selon l'une quelconque des revendications 1 à 3, dans lequel
la première partie (57A) inclut une première source de lumière (61A), une seconde source de lumière (61B) et un élément de synthèse de lumière (69), la seconde source de lumière (61B) présentant un axe optique dans une direction différente d'une direction d'un axe optique de la première source de lumière (61A), l'élément de synthèse de lumière (69) étant configuré pour synthétiser une lumière à partir de la première source de lumière (61A) et une lumière à partir de la seconde source de lumière (61B) pour produire une lumière synthétisée et émettre la lumière synthétisée.

5. Dispositif d'affichage tête haute (3) selon la revendication 4, dans lequel
la première partie (57A) inclut une pluralité de lentilles (71) configurées pour focaliser la lumière émise par l'élément de synthèse de lumière (69).

6. Dispositif d'affichage tête haute (3) selon la revendication 5, dans lequel
l'élément de synthèse de lumière (69) est séparé des lentilles (71) dans une direction dans laquelle s'étend le premier trajet optique (A).

7. Casque (101) équipé d'un dispositif d'affichage tête haute (3), dans lequel
le dispositif d'affichage tête haute (3) inclut un module de projection (39) configuré pour projeter une lumière d'affichage sur une cible de projection (83), la lumière d'affichage étant utilisée pour former une image d'affichage capable d'être reconnue visuellement comme une image virtuelle par un utilisateur portant le casque (101) à travers la cible de projection (83), la cible de projection (83) étant disposée devant un oeil (E) de l'utilisateur et présentant à la fois une transmission de lumière et une réflexion de lumière, dans lequel
le module de projection (39) inclut un émetteur de lumière (57) et un miroir (59), l'émetteur de lumière (57) et le miroir (59) étant incorporés séparément sur les côtés gauche et droit d'une partie de menton (111) du casque (101), l'émetteur de lumière (57) étant configuré pour émettre une lumière d'affichage, le miroir (59) étant configuré pour réfléchir la lumière d'affichage émise par l'émetteur de lumière (57) vers la cible de projection (83), **caractérisé en ce que**
le miroir (59) est disposé dans une partie proche d'un premier côté par rapport à un centre dans une direction gauche-droite du casque (101),
l'émetteur de lumière (57) inclut une source de lumière (61A, 61B), une première partie (57A) et une seconde partie (57B), l'émetteur de lumière (57) étant configuré pour émettre de la lumière, la première partie (57A) formant un premier trajet optique (A) à travers lequel passe la lumière provenant de la source de lumière (61A, 61B), la seconde partie (57B) étant connectée à un côté aval du premier trajet optique (A) et formant un second trajet optique (B) dans lequel la lumière qui est passée à travers le trajet optique (A) est introduite, la seconde partie (57B) incluant un élément d'affichage (63) configuré pour générer une lumière d'affichage en utilisant la lumière qui est passée à travers le second trajet optique (B),
la première partie (57A) et la seconde partie (57B) sont disposées dans des parties proches d'un autre côté par rapport au centre dans la direction gauche-droite du casque (101),
la première partie (57A) est disposée de telle sorte que le premier trajet optique (A) s'étend dans une parmi une direction gauche-droite ou une direction haut-bas, et
la seconde partie (57B) est disposée de telle sorte que le second trajet optique (B) s'étend dans une autre parmi la direction gauche-droite ou la direction haut-bas.
